# EUROPÄISCHE PATENTANMELDUNG

(11) **EP 3 741 658 A1**
(43) Veröffentlichungstag der Anmeldung: **25.11.2020**
(21) Anmeldenummer: 19175328.4
(22) Anmeldetag: 20.05.2019
(51) Int. Cl.: B63B 27/10, B66C 1/00

(54) **SYSTEM UND VERFAHREN ZUR VERSORGUNG VON WASSERFAHRZEUGEN, INSBESONDERE SCHIFFEN, IN EINEM HAFEN MIT ELEKTRISCHEM STROM UND BE- UND ENTLADEVORRICHTUNG FÜR EIN SOLCHES SYSTEM UND VERFAHREN**

(71) Anmelder: HPE Hybrid Port Energy GmbH & Co. KG, 21079 Hamburg (DE)
(72) Erfinder: LEHMANN, Dirk, 21079 Hamburg (DE); RAVENS, Lars Justus, 21079 Hamburg (DE)
(74) Vertreter: RGTH

(57) **Zusammenfassung**

Es wird ein System (100) zur Versorgung von Wasserfahrzeugen (10), insbesondere Schiffen (12), in einem Hafen (11) mit elektrischem Strom vorgeschlagen, wobei das System eine Krananlage (16) auf einer Kaianlage (13) und ein erstes Kabel (17) umfasst, wobei der elektrische Strom über das erste Kabel (17) von der Krananlage (16) an das Wasserfahrzeug (10) übertragbar ist, und wobei die Krananlage (16) eine Be- und Entladevorrichtung (15, 15a, 15b) für Wasserfahrzeuge (10) ist.

## Beschreibung

Die vorliegende Erfindung betrifft ein System zur Versorgung von Wasserfahrzeugen, insbesondere Schiffen, in einem Hafen mit elektrischem Strom, wobei das System eine Krananlage und ein erstes Kabel umfasst, wobei der elektrische Strom über das erste Kabel von der Krananlage an das Wasserfahrzeug übertragbar ist. Ferner betrifft die vorliegende Erfindung ein Verfahren zur Versorgung von Wasserfahrzeugen, insbesondere Schiffen, in einem Hafen mit elektrischem Strom sowie eine Be- und Entladevorrichtung für ein System und ein Verfahren zur Versorgung von Wasserfahrzeugen mit elektrischem Strom.

### Technologischer Hintergrund

Bei im Hafen, insbesondere zum Be- und Entladen, liegenden Schiffen, beispielsweise Containerschiffen, Bulker, Stückgutfrachter, etc., ist es üblich, deren Stromaggregate, die mit Dieselmotoren betrieben werden, weiterlaufen zu lassen, um während der Liegezeit eine ausreichende Stromversorgung der Schiffe zu gewährleisten. Insbesondere aus umweltschutztechnischen Gründen ist es momentan ein Bestreben der meisten Hafenbetreiber weltweit, den CO₂-Ausstoß von in einem Hafen liegenden Schiffen zu reduzieren. Um eine Stromversorgung der Schiffe während der Liegezeiten zu 100 % aus Landstrom ermöglichen zu können, ist es im Stand der Technik bekannt, an den Liegeplätzen für Schiffe in Häfen Anschlussvorrichtungen zum Anschluss des Bordnetzes der Schiffe über entsprechende Kabel an das Landstromnetz vorzusehen. Die Einrichtung solcher Landstromanschlüsse ist jedoch mit erheblichem bautechnischen Aufwand und Liegeplatzausfallzeiten verbunden, da die Kabel des Landstromnetzes für die Installation der Anschlussvorrichtungen und der dazugehörigen elektrotechnischen Einrichtungen in der Regel unterirdisch verlegt werden müssen.

Aus der KR 10-1919250 B1 ist eine mobile Vorrichtung zur Versorgung von ankernden Schiffen mit Energie aus einem Landnetz bekannt. Die Vorrichtung kann einen Kran umfassen. Die Vorrichtung umfasst ferner eine Kabeltrommel von der ausgehend ein Kabel über den Kran zu einem schiffsseitigen Stromanschluss geführt wird. Die Kabeltrommel kann auf einem auf Schienen verfahrbaren Container angeordnet sein.

Aus der KR 10-1693151 B1 ist eine Stromversorgungsvorrichtung bekannt, welche ein in einem Hafen befindliches Schiff mit Landstrom versorgt. Bei der Stromversorgungsvorrichtung sind zwei mittels eines Gelenks miteinander verbundene Arme mit einer mobilen, an Land befindlichen Basis verbunden. Auf der mobilen Basis ist eine Kabeltrommel angeordnet. Ein Kabel der Kabeltrommel ist entlang der beiden Arme auf das Schiff führbar ist, indem die beiden Arme ausgefahren werden.

Die US 2005/0184589 A1 offenbart ein Verfahren zum landseitigen Versorgen eines Schiffes mit Strom, wobei das Schiff mehrere Generatoren aufweist. Durch eine zeitweise parallele Versorgung der Generatoren mit Landstrom und bordeigenem Strom soll eine Unterbrechung der Stromversorgung während des Anschlussvorgangs vermieden werden.

Die WO 2017/216244 A1 offenbart ein System zum Verbinden eines elektrischen Verteilersystems eines Schiffes mit einer landseitigen Stromversorgung umfassend wenigstens zwei stapelbare Stromversorgungscontainer, welche auf dem Schiff platziert werden. Die Energieversorgung erfolgt über ein Kabel, welches auf einer Kabeltrommel aufrollbar ist.

Die DE 10 2017 208 136 A1 offenbart eine Vorrichtung für den elektrischen Landanschluss eines Schiffes, wobei die Vorrichtung zwei voneinander beabstandete Kabelrollensätze zur Aufnahme eines Versorgungskabels aufweist. Die Vorrichtung kann mittels eines schiffseigenen Versorgungskrans oder einer Containerbrücke auf dem Schiff platziert werden.

Aus der DE 10 2015 120 629 A1 ist eine Vorrichtung zur Landstromversorgung eines Schiffes bekannt. Am Schiff ist ein Anschluss in Form einer Steckverbindung für einen Landnetzanschluss an einem Transformator angeordnet, welcher die Landnetz-Mittelspannung auf Bordnetzspannung umwandelt, sodass die Vorrichtung auf bereits vorhandenen Schiffen nachgerüstet werden kann.

Aus der WO 2015/004288 A1 der Anmelderin ist eine kompakt ausgebildete Stromversorgungseinheit zur Versorgung eines Wasserfahrzeuges, insbesondere eines Bordnetzes des Wasserfahrzeuges, mit elektrischer Energie und zur Anordnung auf dem Wasserfahrzeug bekannt. In einem Transportcontainer der Stromversorgungseinheit ist wenigstens eine mit Gas betreibbare Verbrennungskraftmaschine sowie ein von der Verbrennungskraftmaschine antreibbarer Generator zur Stromerzeugung angeordnet. Der erzeugte Strom kann in das Bordnetz eines Schiffes eingespeist werden.

### Darstellung der Erfindung: Aufgabe, Lösung, Vorteile

Es ist Aufgabe der vorliegenden Erfindung, ein System und ein Verfahren zur Versorgung von Wasserfahrzeugen, insbesondere Schiffen, in einem Hafen mit elektrischem Strom bereitzustellen, welches flexibel einsetzbar ist, mit geringem Aufwand installierbar und insbesondere in bestehenden Hafenanlagen nachrüstbar ist und welches den üblichen Betrieb in einer Hafenanlage nicht beeinträchtigt.

Zur Lösung der der Erfindung zugrundeliegenden Aufgabe wird ein System zur Versorgung von Wasserfahrzeugen, insbesondere Schiffen, in einem Hafen mit elektrischem Strom vorgeschlagen, wobei das System eine Krananlage auf einer Kaianlage und ein erstes Kabel umfasst, wobei der elektrische Strom über das erste Kabel von der Krananlage an das Wasserfahrzeug übertragbar ist, wobei ferner vorgesehen ist, dass die Krananlage eine Be- und Entladevorrichtung für Wasserfahrzeuge ist.

Erfindungsgemäß umfasst das System ein erstes Kabel, welches derart angeordnet ist, dass elektrischer Strom über das erste Kabel von der Be- und Entladevorrichtung an ein Wasserfahrzeug, insbesondere an ein an einer Kaianlage liegendes Wasserfahrzeug, übertragen werden kann. Dadurch, dass der elektrische Strom von einer Be- und Entladevorrichtung über das erste Kabel an das Wasserfahrzeug übertragen wird, kann für das erfindungsgemäße System auf bereits bestehenden Vorrichtungen in einer Hafenanlage zurückgegriffen werden.

So sind in den meisten Häfen Containerkräne und/oder Schüttgutkräne und/oder Stückgutkräne im Einsatz. Bei der Aus- oder Nachrüstung solcher Be- und Entladevorrichtungen mit einem ersten Kabel zur Übertragung von elektrischem Strom von der Be- und Entladevorrichtung zu dem Wasserfahrzeug müssen somit keine Kabel eines landseitigen Stromnetzes unterirdisch verlegt werden. Es kommt somit bei der Installation des Systems zur Versorgung von Wasserfahrzeugen mit elektrischem Strom nicht zu wesentlichen Liegeausfallzeiten. Auch die Beeinträchtigung des üblichen Betriebs in einer Hafenanlage wird minimiert.

Grundsätzlich ist es auch möglich, dass anstelle des ersten Kabels zwei "erste" Kabel, beispielsweise in Form eines ersten Doppelkabels, vorgesehen sind, wobei der elektrische Strom über die zwei "ersten" Kabel, bzw. die Kabel des ersten Doppelkabels, von der Be- und Entladevorrichtung an das Wasserfahrzeug übertragbar ist. Die Verwendung von zwei "ersten" Kabeln, bzw. eines ersten Doppelkabels, ist dann vorteilhaft, wenn für die Stromversorgung des Wasserfahrzeugs zwei Kabel verwendet werden müssen. So ist bei einigen Schiffstypen, wie beispielsweise Containerschiffen, standardmäßig vorgesehen, dass eine externe Stromversorgung über zwei Kabel zu erfolgen hat, wobei entsprechend zwei Stromversorgungsanschlüsse am Schiff vorgesehen sind. Entsprechend können für die folgend beschriebenen Ausgestaltungen der Erfindung anstelle eines ersten Kabels auch stets zwei "erste" Kabel, bzw. ein erstes Doppelkabel vorgesehen sein.

Im Folgenden wird unter einem ersten Doppelkabel die Kombination von zwei "ersten" Kabeln verstanden, welche gegebenenfalls jedoch nicht notwendigerweise miteinander verbunden sein müssen, also insbesondere keine gemeinsame Umhüllung aufweisen müssen, sondern auch als zwei weitgehend separate Kabel ausgeführt sein können.

Ferner kann bevorzugt vorgesehen sein, dass neben dem ersten Kabel oder dem ersten Doppelkabel zusätzlich ein Landstromkabel vorgesehen ist, über welches ein elektrischer Strom von einer externen, insbesondere landbasierten Stromquelle, an ein Wasserfahrzeug übertragen werden kann. Das Landstromkabel ist dabei bevorzugt nicht dazu ausgebildet, elektrischen Strom von der Be- und Entladevorrichtung an das Wasserfahrzeug zu übertragen. Das Landstromkabel kann zum Anschluss an einen bekannten Landstromanschluss ausgebildet sein. Die Stromversorgung des Wasserfahrzeugs kann dann alternativ nur über das erste Kabel, bzw. das erste Doppelkabel, oder über das erste Kabel, bzw. das erste Doppelkabel, und das Landstromkabel, oder auch nur über das Landstromkabel erfolgen. Diese Flexibilität ist insbesondere von Vorteil, wenn Probleme mit einem der Stromversorgungswege, das heißt über das erste Kabel oder über das Landstromkabel, auftreten.

Bevorzugt ist vorgesehen, dass die Be- und Entladevorrichtung für Wasserfahrzeuge auf einem Schienensystem einer Kaianlage verfahrbar ist.

Die Stromversorgung der im Hafen liegenden Wasserfahrzeuge ist daher sehr flexibel bezüglich des Liegeplatzes eines Wasserfahrzeuges bzw. der Positionierung eines Stromversorgungsanschlusses für das Bordnetz des Wasserfahrzeugs entlang des Rumpfes des Wasserfahrzeugs, da das erste Kabel, mit welchem der elektrische Strom von der Be- und Entladevorrichtung zu dem Wasserfahrzeug übertragen wird, mitsamt der Be- und Entladevorrichtung verfahren werden und somit problemlos an den Ort befördert werden kann, an dem ein Anschluss über den Stromversorgungsanschluss für das Bordnetz erfolgen kann.

Das Schienensystem kann Schienen umfassen. Unter einem Schienensystem wird im Rahmen der Erfindung auch ein System aus Führungsnuten oder Rillen verstanden, entlang derer die Be- und Entladevorrichtung geführt verfahrbar ist.

Bevorzugt ist vorgesehen, dass die Be- und Entladevorrichtung für Wasserfahrzeuge ein Hafenkran und/oder eine Containerbrücke und/oder ein Schüttgutkran und/oder ein Stückgutkran ist.

Eine Containerbrücke, auch Containerkran oder Portainer genannt, ist ein Portalkran, mit dem ISO-Container zwischen einem Wasserfahrzeug, insbesondere einem Schiff, und einer Kaianlage umgeschlagen werden. Eine Containerbrücke umfasst eine Laufkatze, welche zum Querverfahren entlang der Kaianlage auf einem Schienensystem verfahrbar geführt ist.

Bevorzugt ist vorgesehen, dass das Schienensystem parallel zu einer Kaimauer der Kaianlage angeordnet ist. Es braucht somit über ein bereits für das Verfahren der Be- und Entladevorrichtung vorgesehenes Schienensystem hinaus kein weiteres Schienensystem vorgesehen werden. Der Installationsaufwand des Systems wird dadurch verringert.

Mit weiterem Vorteil kann vorgesehen sein, dass eine Anschlussvorrichtung zum Anschluss eines elektrischen Bordnetzes eines Wasserfahrzeuges vorgesehen ist, wobei das erste Kabel mit der Anschlussvorrichtung elektrisch verbindbar oder verbunden ist, wobei die Anschlussvorrichtung bevorzugt temporär oder dauerhaft auf der Kaianlage anordbar oder angeordnet ist.

Der elektrische Strom wird somit von der Be- und Entladevorrichtung über das erste Kabel zu der Anschlussvorrichtung geleitet, welche mit dem elektrischen ersten Kabel elektrisch verbindbar oder verbunden ist. An die Anschlussvorrichtung wird wiederum das elektrische Bordnetz eines Wasserfahrzeuges angeschlossen, sodass eine Versorgung des Wasserfahrzeuges mit elektrischem Strom von der Be- und Entladevorrichtung möglich wird.

Die Anschlussvorrichtung ist dabei entweder temporär oder dauerhaft auf der Kaianlage anordbar oder angeordnet. Insbesondere bei einer temporär auf einer Kaianlage anordbaren Anschlussvorrichtung wird eine besonders hohe Flexibilität des Systems bereitgestellt. So kann die Anschlussvorrichtung je nach Liegeplatz des Schiffes und Position des Stromversorgungsanschlusses des Bordnetzes entlang des Schiffsrumpfes an der Kaianlage versetzt werden, ohne dass größere Umbauarbeiten an der Kaianlage oder an den bereits vorhandenen Stromversorgungsvorrichtungen vorgenommen werden müssen.

Das Bordnetz des Wasserfahrzeugs kann mittels einer ersten und/oder einer zweiten, insbesondere wasserfahrzeugseitigen, Stromleitung mit der Anschlussvorrichtung verbunden werden. Die erste und/oder die zweite Stromleitung kann/können jedoch auch schon an der Anschlussvorrichtung vorgesehen sein.

Grundsätzlich ist es auch möglich, dass das erste Kabel, bzw. das erste Doppelkabel direkt, d.h. ohne den Weg über eine Anschlussvorrichtung, mit dem Bordnetz des Wasserfahrzeugs verbunden wird. Insbesondere ist es daher möglich, dass das erste Kabel, bzw. das erste Doppelkabel, direkt von der Be- und Entladevorrichtung zu dem Wasserfahrzeug geführt wird.

Mit weiterem Vorteil weist die Be- und Entladevorrichtung eine erste Kabeltrommel auf, wobei das erste Kabel derart auf der ersten Kabeltrommel angeordnet und mit der Anschlussvorrichtung elektrisch verbindbar oder verbunden ist, dass das erste Kabel bei auf der Kaianlage angeordneter Anschlussvorrichtung beim Verfahren der Be- und Entladevorrichtung von der ersten Kabeltrommel abgerollt und/oder aufgerollt wird.

Mit anderen Worten kann die Be- und Entladevorrichtung, während das Wasserfahrzeug mit elektrischem Strom versorgt wird, entlang der Kaianlage und insbesondere auf dem Schienensystem verfahren werden. Vergrößert sich der Abstand zwischen Be- und Entladevorrichtung und Anschlussvorrichtung, so wird das erste Kabel von der ersten Kabeltrommel abgerollt. Verringert sich hingegen der Abstand zwischen Be- und Entladevorrichtung und Anschlussvorrichtung, so wird das erste Kabel wieder auf die erste Kabeltrommel aufgerollt. Durch eine derart ausgebildete erste Kabeltrommel wird somit verhindert, dass das erste Kabel in einer Weise auf der Kaianlage zum Liegen kommt, dass es den üblichen Betrieb im Hafen, insbesondere das Be- und Entladen der Schiffe, behindern würde.

Sind zwei "erste" Kabel in Form eines ersten Doppelkabels vorgesehen, was für die Stromversorgung bestimmter Schiffstypen aufgrund bestehender Standards nötig sein kann, so können die beiden "ersten" Kabel, bzw. das erste Doppelkabel, auf der ersten Kabeltrommel angeordnet und beim Verfahren der Be- und Entladevorrichtung von der ersten Kabeltrommel abgerollt und/oder aufgerollt werden.

Bevorzugt ist vorgesehen, dass die Kaianlage eine längliche Vertiefung, insbesondere eine Nut oder Rille und/oder eine Führungsschiene umfasst, wobei die Vertiefung und/oder die Führungsschiene bevorzugt parallel zu dem Schienensystem und/oder der Kaimauer verläuft, sodass das erste Kabel beim Verfahren der Be- und Entladevorrichtung auf einer Strecke zwischen der Be- und Entladevorrichtung und der Anschlussvorrichtung in der Vertiefung und/oder an der Führungsschiene abgelegt und/oder aus der Vertiefung und/oder von der Führungsschiene aufgenommen oder abgenommen wird.

Während die Be- und Entladevorrichtung entlang der Kaimauer verfahren wird, wird das erste Kabel von der ersten Kabeltrommel auf- oder abgerollt. Wenn das erste Kabel in Kontakt mit dem Boden beziehungsweise der Kaianlage kommt, wird dieses in der Nut oder Rille oder an der Führungsschiene angeordnet. Dabei liegt das erste Kabel auf der Strecke zwischen der Be- und Entladevorrichtung und der Anschlussvorrichtung in der Nut oder Rille oder an der Führungsschiene an. Besonders vorteilhaft an dieser Ausgestaltung ist, dass bereits auf der Kaianlage vorhandene längliche Vertiefungen oder Führungsschienen verwendet werden können, welche für eine kabelgebundene Stromversorgung der Be- und Entladevorrichtung mit einem zweiten Kabel bereits vorgesehen sind.

Alternativ kann die längliche Vertiefung oder die Führungsschiene auch eine separate längliche Vertiefung oder Führungsschiene zusätzlich zu der bereits vorhandenen länglichen Vertiefung oder Führungsschiene sein. Durch das Ablegen des ersten Kabels in der länglichen Vertiefung oder das Anlegen des ersten Kabels an der Führungsschiene auf der Strecke zwischen der Be- und Entladevorrichtung und der Anschlussvorrichtung wird verhindert, dass das Kabel ungeordnet auf der Kaianlage zum Liegen kommt und darüber hinaus kein Hindernis für Fahrzeuge und keine Stolperfalle für Hafenmitarbeiter im Hafenbereich darstellt.

Ferner kann bevorzugt vorgesehen sein, dass die Be- und Entladevorrichtung eine Verteilereinrichtung aufweist, wobei das erste Kabel mit der Verteilereinrichtung elektrisch verbunden ist, sodass elektrischer Strom von der Verteilereinrichtung in das erste Kabel einspeisbar ist.

Entsprechend wird der elektrische Strom von der Be- und Entladevorrichtung über die Verteilereinrichtung in das erste Kabel eingespeist, über dieses zur bevorzugt vorgesehenen Anschlussvorrichtung geleitet und von dort in das Bordnetz des an der Kaimauer liegenden Wasserfahrzeugs eingespeist.

Mit weiterem Vorteil kann vorgesehen sein, dass ein elektrisches System der Be- und Entladevorrichtung elektrisch mit der Verteilereinrichtung verbunden ist.

Die Verteilereinrichtung sorgt in dieser bevorzugten Ausgestaltung somit dafür, dass der vorhandene elektrische Strom einerseits zum Betreiben des mindestens einen elektrischen Systems der Be- und Entladevorrichtung verwendet wird und andererseits über das erste Kabel und die Anschlussvorrichtung an das Wasserfahrzeug zum Betreiben der Bordsysteme des Wasserfahrzeuges geleitet werden kann. Vorteilhafterweise ist vorgesehen, dass die Be- und Entladevorrichtung eine zweite Kabeltrommel und ein auf der zweiten Kabeltrommel angeordnetes zweites Kabel aufweist, wobei ein elektrischer Strom von einer externen, insbesondere landbasierten, Stromquelle über das zweite Kabel zur Be- und Entladevorrichtung übertragbar ist.

Folglich wird die Be- und Entladevorrichtung über eine externe, insbesondere landbasierte, Stromquelle mit elektrischem Strom versorgt, wobei der elektrische Strom über das zweite Kabel zur Be- und Entladevorrichtung übertragen wird. Das zweite Kabel ist auf einer zweiten Kabeltrommel angeordnet, sodass die Be- und Entladevorrichtung insbesondere entlang des Schienensystems der Kaianlage querverfahren werden kann und dabei ununterbrochen mit Strom von der externen Stromquelle versorgt wird. Wie bereits bei der ersten Kabeltrommel kann vorgesehen sein, dass das zweite Kabel von der zweiten Kabeltrommel auf- und abgerollt wird, je nachdem, in welche Richtung sich die Be- und Entladevorrichtung bewegt. Der elektrische Strom von der externen, insbesondere landbasierten, Stromquelle wird somit über das zweite Kabel zur Be- und Entladevorrichtung übertragen und kann dann bevorzugterweise mittels der Verteilereinrichtung zum Betrieb der elektrischen Systeme der Be- und Entladevorrichtung verwendet und gleichzeitig über das erste Kabel und die bevorzugt vorgesehene Anschlussvorrichtung an das Wasserfahrzeug zum Betrieb der Bordsysteme des Wasserfahrzeuges weitergeleitet werden.

Bevorzugt ist daher vorgesehen, dass das zweite Kabel derart auf der zweiten Kabeltrommel angeordnet ist, dass das zweite Kabel beim Verfahren der Be- und Entladevorrichtung von der zweiten Kabeltrommel abgerollt und/oder aufgerollt wird.

Anstelle des zweiten Kabels können auch zwei "zweite" Kabel vorgesehen sein. Wie vorstehend schon hinsichtlich des ersten Kabels erläutert können die zwei "zweiten" Kabel in Form eines zweiten Doppelkabels ausgebildet sein, wobei im Folgenden unter einem zweiten Doppelkabel die Kombination von zwei "zweiten" Kabeln verstanden wird, welche gegebenenfalls jedoch nicht notwendigerweise miteinander verbunden sein müssen, also insbesondere keine gemeinsame Umhüllung aufweisen müssen, sondern auch als zwei weitgehend separate Kabel ausgeführt sein können. Entsprechend können für die folgend beschriebenen Ausgestaltungen der Erfindung anstelle eines zweiten Kabels auch stets zwei "zweite" Kabel, bzw. ein zweites Doppelkabel, vorgesehen sein.

Die Verwendung von zwei "zweiten" Kabeln, bzw. von einem zweiten Doppelkabel, ist insbesondere dann von Vorteil, wenn eine Be- und Entladevorrichtung bereits über ein zweites Kabel zur Stromversorgung mit einer externen, insbesondere landbasierten, Stromquelle verbunden ist, dieses bestehende zweite Kabel aber nicht ausreichend dimensionert ist, um zusätzlich zum elektrischen Strom zum Betrieb der elektrischen Systeme der Be- und Entladevorrichtung auch noch den elektrischen Strom zur Versorgung eines Wasserfahrzeugs zu transportieren. In diesem Fall, insbesondere wenn ein Austausch des zu gering dimensionierten bestehenden zweiten Kabels nicht möglich ist, kann ein zweites "zweites" Kabel vorgesehen sein, welches mit dem bestehenden ersten "zweiten" Kabel bevorzugt ein zweites Doppelkabel bildet.

Weiter bevorzugt ist vorgesehen, dass das zweite Kabel beim Verfahren der Be- und Entladevorrichtung in der länglichen Vertiefung und/oder an der Führungsschiene abgelegt und/oder aus der Vertiefung und/oder von der Führungsschiene aufgenommen oder abgenommen wird.

Die längliche Vertiefung kann dabei dieselbe Vertiefung sein, in der auch das erste Kabel aufgenommen und/oder abgelegt wird. Insbesondere ist die längliche Vertiefung die Vertiefung, welche von vornherein für die Stromversorgung der Be- und Entladevorrichtung mittels des zweiten Kabels im Hafen vorhanden ist.

Jedoch kann die längliche Vertiefung für das zweite Kabel auch verschieden von der länglichen Vertiefung für das erste Kabel sein. Insbesondere können die beiden länglichen Vertiefungen dann parallel zueinander und insbesondere parallel zu dem Schienensystem entlang der Kaimauer angeordnet sein.

Mit weiterem Vorteil ist vorgesehen, dass die erste Kabeltrommel und die zweite Kabeltrommel eine Doppelkabeltrommel bilden.

Durch die Ausgestaltung der ersten Kabeltrommel und der zweiten Kabeltrommel als Doppelkabeltrommel wird eine besonders platzsparende Anordnung der beiden Kabeltrommeln an der Be- und Entladevorrichtung bereitgestellt.

Zudem kann durch das Vorsehen der beiden Kabeltrommeln als Doppelkabeltrommel ermöglicht werden, dass, wenn das erste Kabel auf die erste Kabeltrommel aufgerollt wird, gleichzeitig das zweite Kabel von der zweiten Kabeltrommel abgerollt wird und umgekehrt. Je nach der relativen Positionierung der Be- und Entladevorrichtung zu dem Wasserfahrzeug und/oder der Anschlussvorrichtung sowie der relativen Positionierung der Be- und Entladevorrichtung zu einem Anschlusspunkt des zweiten Kabels mit der externen, insbesondere landbasierten, Stromquelle, bzw. mit einem Landstromnetz können das erste Kabel und das zweite Kabel auch gleichzeitig aufgerollt bzw. gleichzeitig abgerollt werden. Entsprechend wird dadurch sichergestellt, dass nur die für die direkte Stromübertragung notwendige Länge des ersten Kabels und des zweiten Kabels auf der Kaianlage zu liegen kommt, und die nicht zur Stromversorgung benötigte Länge des ersten Kabels und des zweiten Kabels auf den Kabeltrommeln aufgerollt ist.

Ferner kann vorgesehen sein, dass das zweite Kabel mit der Verteilereinrichtung elektrisch verbunden ist, sodass der elektrische Strom von dem zweiten Kabel über die Verteilereinrichtung in das erste Kabel einspeisbar ist.

Mit anderen Worten wird der elektrische Strom von der externen, insbesondere landbasierten, Stromquelle über das zweite Kabel, welches von der zweiten Kabeltrommel auf- und abgerollt werden kann, an die Verteilereinrichtung geleitet. Von der Verteilereinrichtung wird ein Teil des Stroms über das erste Kabel, welches auf der ersten Kabeltrommel angeordnet ist, und die bevorzugt vorgesehene Anschlussvorrichtung an das Bordnetz des an der Kaianlage liegenden Wasserfahrzeugs, insbesondere Schiffes, weitergeleitet. Gleichzeitig kann ein weiterer Teil des elektrischen Stromes von der Verteilereinrichtung zum Betrieb der elektrischen Systeme der Be- und Entladevorrichtung verwendet werden.

Sind zwei "zweite" Kabel in Form eines zweiten Doppelkabels vorgesehen, so ist es auch möglich, dass der über das erste "zweite" Kabel an die Be- und Entladevorrichtung übertragene Strom ausschließlich zum Betrieb der elektrischen Systeme der Be- und Entladevorrichtung verwendet wird, und dass der über das zweite "zweite" Kabel an die Be- und Entladevorrichtung übertragene Strom vollständig über das erste Kabel, bzw. das erste Doppelkabel, an das Wasserfahrzeug weitergeleitet wird und ausschließlich zur Versorgung des Wasserfahrzeugs mit elektrischem Strom verwendet wird. Die Verteilereinrichtung ist dann bevorzugt ausgebildet, den elektrischen Strom von dem zweiten "zweiten" Kabel direkt in das erste Kabel, bzw. das erste Doppelkabel, einzuspeisen.

Mit besonderem Vorteil ist vorgesehen, dass das zweite Kabel einen geringeren elektrischen Widerstand, insbesondere einen geringeren elektrischen Widerstand pro Längeneinheit, als das erste Kabel aufweist.

Eine derartige Ausgestaltung ist insbesondere dann vorteilhaft, wenn mit dem elektrischen Strom der externen, insbesondere landbasierten, Stromquelle sowohl die elektrischen Systeme der Be- und Entladevorrichtung als auch das Bordnetz eines an der Kaianlage liegenden Wasserfahrzeugs versorgt werden soll. Da der Gesamtstrom, welcher über das zweite Kabel von der externen Stromquelle zu der Be- und Entladevorrichtung geleitet werden muss, größer als der über das erste Kabel an das Bordnetz des Wasserfahrzeugs geleitete Strom ist, kann das erste Kabel einen größeren elektrischen Widerstand als das zweite Kabel aufweisen.

Bevorzugt ist vorgesehen, dass das zweite Kabel eine größere Querschnittsfläche als das erste Kabel aufweist.

Insbesondere, wenn der spezifische Widerstand des ersten Kabels und des zweiten Kabels identisch sind, kann durch das Vorsehen einer größeren Querschnittsfläche des zweiten Kabels bewirkt werden, dass der elektrische Widerstand pro Längeneinheit für das zweite Kabel geringer ist als für das erste Kabel.

Die Vergrößerung der Querschnittsfläche des zweiten Kabels kann auch durch die Bereitstellung eines zweiten Doppelkabels umfassend zwei "zweite" Kabel erzielt werden.

Vorteilhafterweise kann eine Stromquelle vorgesehen sein, wobei die Stromquelle an der Be- und Entladevorrichtung angeordnet ist und elektrisch mit der Verteilereinrichtung verbunden ist.

Mit anderen Worten kann zusätzlich oder alternativ zu der externen, insbesondere landbasierten, Stromquelle eine Stromquelle an der oder auf der Be- und Entladevorrichtung angeordnet sein. Von der an oder auf der Be- und Entladevorrichtung angeordneten Stromquelle kann über die Verteilereinrichtung, das erste Kabel und die bevorzugte Anschlussvorrichtung das Bordnetz des an der Kaianlage liegenden Schiffes mit elektrischem Strom versorgt werden. Gleichzeitig können aus der an oder auf der Be- und Entladevorrichtung angeordneten Stromquelle auch die elektrischen Systeme der Be- und Entladevorrichtung betrieben werden.

Besonders bevorzugt ist die Stromquelle eine Stromerzeugungsvorrichtung, wobei die Stromerzeugungsvorrichtung einen Verbrennungsmotor, insbesondere ein Gasverbrennungsmotor, und einen Generator umfasst. Darüber hinaus kann die Stromerzeugungsvorrichtung auch eine Verbrennungskraftmaschine für Diesel- oder Benzinkraftstoffe aufweisen.

Alternativ und/oder zusätzlich kann die Stromquelle auch eine Wasserstoffzelle oder Solaranlagen umfassen. Darüber hinaus kann vorgesehen sein, dass die Stromquelle einen Energiespeicher wie eine Batterie umfasst. Im Falle der Ausgestaltung der Stromquelle als Energiespeicher muss diese regelmäßig aufgeladen werden, beispielsweise über auf der oder an der Be- und Entladevorrichtung vorgesehene Solaranlagen, oder mittels eines von einer externen, insbesondere landbasierten, Energiequelle bereitgestellten elektrischen Stroms. Grundsätzlich kann die Stromquelle aber auch als eine Kombination aus einem Verbrennungsmotor und einem Generator und einem Energiespeicher oder einer Wasserstoffzelle ausgebildet sein.

Weiter bevorzugt kann die Stromquelle in Form eines ISO-Containers oder ähnlichem ausgestaltet und insbesondere transportabel sein.

Somit kann die Stromquelle leicht an oder auf der Be- und Entladevorrichtung angeordnet und ausgetauscht werden.

Das System kann auch einen Transformator und/oder einen Frequenzumrichter und/oder einen Schutzschalter aufweisen. Dies ist insbesondere dann vorteilhaft, wenn das Bordnetz des mit elektrischem Strom zu versorgenden Wasserfahrzeugs auf einer anderen Stromspannung und/oder einer anderen Stromfrequenz als das Landstromnetz, bzw. als die externe Stromquelle oder als die auf der Be- und Entladevorrichtung angeordnete Stromquelle läuft, und der elektrische Strom entsprechend transformiert bzw. frequenzangepasst werden muss. Der Transformator, und/oder der Frequenzumrichter und/oder der Schutzschalter kann/können auf der Be- und Entladevorrichtung angeordnet sein. Alternativ oder zusätzlich kann eine Anpassung der Spannung oder der Stromfrequenz auch mittels eines Elektromotors und eines von dem Elektromotor angetriebenen Stromgenerators erfolgen. Der Elektromotor wird dann von dem von der externen Stromquelle oder von dem von der auf der Be- und Entladevorrichtung angeordneten Stromquelle gelieferten elektrischen Strom angetrieben. Durch entsprechende Ausgestaltung des Stromgenerators, beispielsweise durch die Wahl der Polanzahl des Stromgenerators, kann der von der externen Stromquelle oder der von der auf der Be- und Entladevorrichtung angeordneten Stromquelle bereitgestellte elektrische Strom auf die Spannung und/oder die Frequenz des Bordnetzes des Wasserfahrzeugs transformiert bzw. umgewandelt werden. Auch der Elektromotor und/oder der Stromgenerator können auf der Be- und Entladevorrichtung angeordnet sein.

Weiter bevorzugt ist vorgesehen, dass das System mehrere Be- und Entladevorrichtungen umfasst, wobei mindestens jede fünfte, bevorzugt jede vierte, insbesondere bevorzugt jede dritte, ganz besonders bevorzugt jede zweite oder jede Be- und Entladevorrichtung zur Versorgung von Wasserfahrzeugen, insbesondere Schiffen, in einem Hafen mit elektrischem Strom ausgebildet ist.

Somit braucht nicht jede Be- und Entladevorrichtung an der Kaianlage mit einem ersten Kabel beziehungsweise einer ersten Kabeltrommel, einer Anschlussvorrichtung oder einer Stromerzeugungsvorrichtung ausgestattet sein. Insbesondere wenn große Schiffe be- und entladen werden müssen, und somit mehrere Be- und Entladevorrichtungen zum Be- und Entladen der großen Schiffe verwendet werden, reicht es aus, wenn nur jede fünfte, bevorzugt jede vierte, weiter bevorzugt jede dritte oder jede zweite Be- und Entladevorrichtung zur Versorgung von Wasserfahrzeugen in einem Hafen mit elektrischem Strom ausgebildet ist.

Eine weitere Lösung der der Erfindung zugrundeliegenden Aufgabe besteht in einer Be- und Entladevorrichtung für ein vorbeschriebenes System zum Versorgen von Wasserfahrzeugen im Hafen mit elektrischem Strom.

Die erfindungsgemäße Be- und Entladevorrichtung kann dabei sämtliche im Zusammenhang mit der Be- und Entladevorrichtung für das vorbeschriebene System beschriebenen Merkmale aufweisen und ist insbesondere in einem entsprechenden System einsetzbar.

Bevorzugt ist die Be- und Entladevorrichtung für Wasserfahrzeuge ein Hafenkran und/oder eine Containerbrücke und/oder ein Schüttgutkran und/oder ein Stückgutkran.

Insbesondere bevorzugt kann die Be- und Entladevorrichtung eine erste Kabeltrommel und eine zweite Kabeltrommel und insbesondere eine Doppelkabeltrommel, ein erstes und ein zweites Kabel, eine Anschlussvorrichtung, eine Verteilereinrichtung und/oder eine Stromquelle aufweisen.

Eine weitere Lösung der der Erfindung zugrundeliegenden Aufgabe liegt in einem Verfahren zum Versorgen von Wasserfahrzeugen, insbesondere Schiffen, in einem Hafen mit elektrischen Strom, mit einem vorbeschriebenen System, wobei ein Bordnetz eines Wasserfahrzeuges an einer auf einer Kaianlage angeordnete Anschlussvorrichtung angeschlossen wird, wobei ein elektrischer Strom von einer Be- und Entladevorrichtung über ein erstes Kabel und die Anschlussvorrichtung an das Wasserfahrzeug übertragen wird.

Das erfindungsgemäße Verfahren ist insbesondere derart ausgestaltet, dass es mit den im Zusammenhang mit dem vorbeschriebenen System erläuterten Merkmalen und Eigenschaften ausgestattet werden kann. Insbesondere kann die vorbeschriebene Be- und Entladevorrichtung verfahrensgemäß eingesetzt werden. Die Be- und Entladevorrichtung für Wasserfahrzeuge kann als ein Hafenkran und/oder eine Containerbrücke und/oder ein Schüttgutkran und/oder ein Stückgutkran ausgebildet sein.

### Kurze Beschreibung der Figuren

Die Erfindung wird nachstehend näher anhand der Figuren erläutert. Es zeigen:
- Fig. 1: ein System zur Versorgung von Wasserfahrzeugen in einem Hafen mit elektrischem Strom umfassend eine Containerbrücke mit einer ersten und einer zweiten Kabeltrommel,
- Fig. 2: ein System zur Versorgung von Wasserfahrzeugen in einem Hafen mit elektrischem Strom umfassend eine Containerbrücke mit einer Doppelkabeltrommel, und
- Fig. 3: ein Ablaufdiagramm für ein Verfahren zur Versorgung von Wasserfahrzeugen in einem Hafen mit elektrischem Strom.

### Ausführliche Beschreibung der Figuren

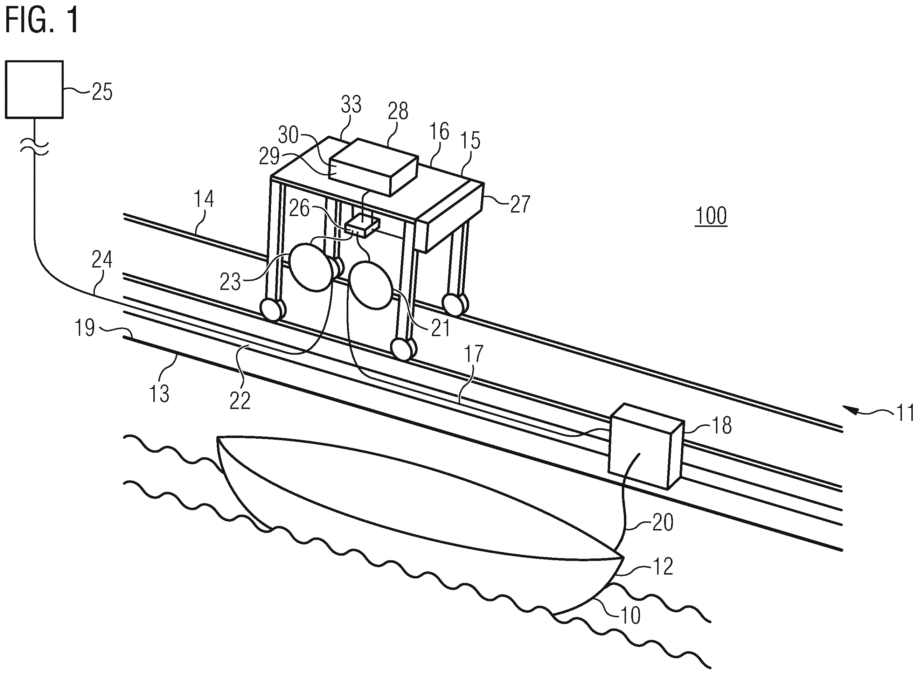

Fig. 1 zeigt ein System 100 zur Versorgung von Wasserfahrzeugen 10 in einem Hafen 11 mit elektrischem Strom. Das Wasserfahrzeug 10 ist in dem dargestellten Beispiel als Schiff 12 ausgebildet. Das Schiff 12 ist an einer Kaianlage 13 zum Be- und Entladen befestigt. Das System 100 umfasst ein Schienensystem 14, auf dem mindestens eine Krananlage 16 in Form einer als Containerbrücke 33 ausgebildeten Be- und Entladevorrichtung 15 querverfahrbar angeordnet ist. Die Be- und Entladevorrichtung 15 umfasst ein erstes Kabel 17, welches zwischen der Be- und Entladevorrichtung 15 und einer Anschlussvorrichtung 18 verläuft. Die Anschlussvorrichtung 18 ist transportabel und temporär an der Kaimauer 19 derart angeordnet, dass ein Bordnetz des Schiffes 12 über eine Stromleitung 20 mit der Anschlussvorrichtung 18 verbindbar ist. Elektrischer Strom kann über das erste Kabel 17 von der Be- und Entladevorrichtung 15 über die Anschlussvorrichtung 18 und die Stromleitung 20 in das Bordnetz des Schiffes 12 eingespeist werden.

Das erste Kabel 17 ist auf einer ersten Kabeltrommel 21 angeordnet, sodass beim Verfahren der Be- und Entladevorrichtung 15 entlang des Schienensystems 14 das erste Kabel 17 je nach Verfahrrichtung und Abstand der Be- und Entladevorrichtung 15 zu der Anschlussvorrichtung 18 auf- oder abgerollt wird. Parallel zum Schienensystem 14 ist eine längliche Vertiefung 22 angeordnet, in der das erste Kabel 17 beim Abrollen abgelegt bzw. aus der das erste Kabel 17 beim Aufrollen aufgenommen wird. Ferner umfasst die Be- und Entladevorrichtung 15 ein auf einer zweiten Kabeltrommel 23 angeordnetes zweites Kabel 24, welches ebenfalls je nach Position und Verfahrrichtung der Be- und Entladevorrichtung 15 von der zweiten Kabeltrommel 23 auf- und abgerollt werden kann. Das zweite Kabel 24 kommt ebenfalls in der länglichen Vertiefung 22 zum Liegen. Das zweite Kabel 24 ist mit einer externen Stromquelle 25 verbunden, sodass elektrischer Strom der externen Stromquelle 25 über das zweite Kabel 24 zu der Be- und Entladevorrichtung 15 geleitet werden kann. Das zweite Kabel 24 ist mit einer Verteilereinrichtung 26 der Be- und Entladevorrichtung 15 elektrisch verbunden. Auch das erste Kabel 17 ist mit der Verteilereinrichtung 26 elektrisch verbunden. Der über das zweite Kabel 24 zu der Be- und Entladevorrichtung 15 geleitete elektrische Strom kann somit über die Verteilereinrichtung 26 in das erste Kabel 17 eingespeist werden und weiter über die Anschlussvorrichtung 18 und die Stromleitung 20 an das Bordnetz des Schiffes 12 geleitet werden. Ferner umfasst die Be- und Entladevorrichtung 15 ein elektrisches System 27, welches ebenfalls mit der Verteilereinrichtung 26 elektrisch verbunden ist. Somit werden von dem elektrischen Strom der externen Stromquelle 25 sowohl das elektrische System 27 als auch das Bordnetz des Schiffes 12 gleichzeitig versorgt. Zudem ist an der Be- und Entladevorrichtung 15 eine Stromerzeugungsvorrichtung 28 angeordnet, welche einen Gasverbrennungsmotor 29 und einen Generator 30 zur Stromerzeugung aufweist. Die dargestellte Stromerzeugungsvorrichtung 28 ist lediglich optional und muss nicht vorhanden sein. Die Stromerzeugungsvorrichtung 28 kann zum Beispiel dann elektrischen Strom liefern, wenn die externe Stromquelle 25 ausfällt.

Aufgrund der höheren durch das zweite Kabel 24 zu leitenden Stromstärke weist das zweite Kabel 24 einen größeren Querschnitt als das erste Kabel 17 auf, wodurch der elektrische Widerstand pro Längeneinheit des zweiten Kabels 24 gegenüber dem ersten Kabel 17 geringer ausfällt.

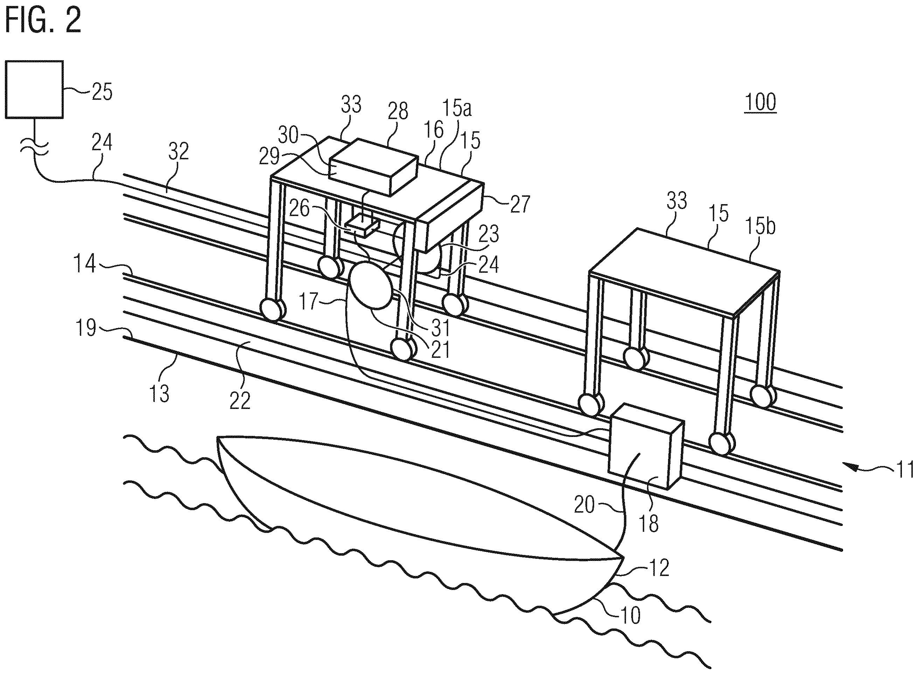

Fig. 2 zeigt eine alternative Ausgestaltung des Systems 100. Das System 100 nach Fig. 2 umfasst mehrere Be- und Entladevorrichtungen 15a, 15b, wobei eine erste Be- und Entladevorrichtung 15a zur Versorgung von Wasserfahrzeugen in einem Hafen mit elektrischem Strom ausgebildet ist. Eine zweite Be- und Entladevorrichtung 15b ist hingegen nicht zur Versorgung von Wasserfahrzeugen 10 in einem Hafen mit elektrischem Strom ausgebildet. Gegenüber der Be- und Entladevorrichtung 15 der Fig. 1 sind die erste Kabeltrommel 21 und die zweite Kabeltrommel 23 als Doppelkabeltrommel 31 ausgebildet. Ein weiterer Unterschied besteht darin, dass für das zweite Kabel 24 eine zweite längliche Vertiefung 32 vorgesehen ist, sodass das erste Kabel 17 und das zweite Kabel 24 jeweils in eine eigene längliche Vertiefung 22, 32 abgelegt werden.

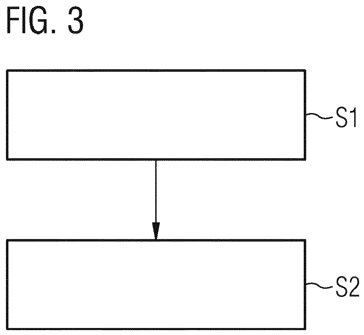

Fig. 3 zeigt ein Ablaufdiagramm für ein erfindungsgemäßes Verfahren zum Versorgen von Wasserfahrzeugen, insbesondere Schiffen, in einem Hafen mit elektrischem Strom. In einem ersten Verfahrensschritt S1 wird ein Bordnetz eines Wasserfahrzeuges 10 an eine auf einer Kaianlage 13 angeordnete Anschlussvorrichtung 18 angeschlossen. In einem zweiten Verfahrensschritt S2 wird dann ein elektrischer Strom von einer Be- und Entladevorrichtung 15 über ein erstes Kabel 17 und die Anschlussvorrichtung 18 an das Wasserfahrzeug 10 übertragen.

### Liste der Bezugszeichen

- 100: System zum Versorgen von Wasserfahrzeugen mit elektrischem Strom

- 10: Wasserfahrzeug
- 11: Hafen
- 12: Schiff
- 13: Kaianlage
- 14: Schienensystem
- 15: Be- und Entladevorrichtung
- 15a: Be- und Entladevorrichtung
- 15b: Be- und Entladevorrichtung
- 16: Krananlage
- 17: Erstes Kabel
- 18: Anschlussvorrichtung
- 19: Kaimauer

- 20: Stromleitung
- 21: Erste Kabeltrommel
- 22: Längliche Vertiefung
- 23: Zweite Kabeltrommel
- 24: Zweites Kabel
- 25: Externe Stromquelle
- 26: Verteilereinrichtung
- 27: Elektrisches System
- 28: Stromerzeugungsvorrichtung
- 29: Gasverbrennungsmotor

- 30: Generator
- 31: Doppelkabeltrommel
- 32: Längliche Vertiefung
- 33: Containerbrücke

## Patentansprüche

1. System (100) zur Versorgung von Wasserfahrzeugen (10), insbesondere Schiffen (12), in einem Hafen (11) mit elektrischem Strom, wobei das System eine Krananlage (16) auf einer Kaianlage (13) und ein erstes Kabel (17) umfasst, wobei der elektrische Strom über das erste Kabel (17) von der Krananlage (16) an das Wasserfahrzeug (10) übertragbar ist,
**dadurch gekennzeichnet,**
**dass** die Krananlage (16) eine Be- und Entladevorrichtung (15, 15a, 15b) für Wasserfahrzeuge (10) ist.

2. System (100) nach Anspruch 1,
**dadurch gekennzeichnet,**
**dass** die Be- und Entladevorrichtung (15, 15a, 15b) für Wasserfahrzeuge (10) auf einem Schienensystem (14) der Kaianlage (13) verfahrbar ist.

3. System (100) nach Anspruch 1 oder 2,
**dadurch gekennzeichnet,**
**dass** die Be- und Entladevorrichtung (15, 15a, 15b) für Wasserfahrzeuge (10) ein Hafenkran und/oder eine Containerbrücke (33) und/oder ein Schüttgutkran und/oder ein Stückgutkran ist.

4. System (100) nach einem der vorgenannten Ansprüche,
**dadurch gekennzeichnet,**
**dass** eine Anschlussvorrichtung (18) zum Anschluss eines elektrischen Bordnetzes eines Wasserfahrzeugs (10) vorgesehen ist, dass das erste Kabel (17) mit der Anschlussvorrichtung (18) elektrisch verbindbar oder verbunden ist, wobei die Anschlussvorrichtung (18), bevorzugt temporär oder dauerhaft, auf der Kaianlage (13) anordbar oder angeordnet ist.

5. System (100) nach Anspruch 4,
**dadurch gekennzeichnet,**
**dass** die Be- und Entladevorrichtung (15, 15a, 15b) eine erste Kabeltrommel (21) aufweist, dass das erste Kabel (17) derart auf der ersten Kabeltrommel (21) angeordnet und mit der Anschlussvorrichtung (18) elektrisch verbindbar oder verbunden ist, dass das erste Kabel (17) bei auf der Kaianlage (13) angeordneter Anschlussvorrichtung (18) beim Verfahren der Be- und Entladevorrichtung (15, 15a, 15b) von der ersten Kabeltrommel (21) abgerollt und/oder aufgerollt wird.

6. System (100) nach Anspruch 4 oder 5,
**dadurch gekennzeichnet,**
**dass** die Kaianlage (13) eine längliche Vertiefung (22, 32), insbesondere eine Nut oder Rille, und/oder eine Führungsschiene umfasst, wobei die Vertiefung (22, 32) und/oder die Führungsschiene bevorzugt parallel zu dem Schienensystem (14) und/oder der Kaimauer (18) verläuft, sodass das erste Kabel (17) beim Verfahren der Be- und Entladevorrichtung (15, 15a, 15b) auf einer Strecke zwischen der Be- und Entladevorrichtung (15, 15a, 15b) und der Anschlussvorrichtung (18) in der Vertiefung (22, 32) und/oder an der Führungsschiene abgelegt und/oder aus der Vertiefung (22, 32) und/oder von der Führungsschiene aufgenommen oder abgenommen wird.

7. System (100) nach einem der vorgenannten Ansprüche,
**dadurch gekennzeichnet,**
**dass** die Be- und Entladevorrichtung (15, 15a, 15b) eine Verteilereinrichtung (26) aufweist, wobei das erste Kabel (17) mit der Verteilereinrichtung (26) elektrisch verbunden ist, sodass der elektrische Strom von der Verteilereinrichtung (26) in das erste Kabel (17) einspeisbar ist, wobei bevorzugt ein elektrisches System (27) der Be- und Entladevorrichtung (15, 15a, 15b) elektrisch mit der Verteilereinrichtung (26) verbunden ist.

8. System (100) nach einem der vorgenannten Ansprüche,
**dadurch gekennzeichnet,**
**dass** die Be- und Entladevorrichtung (15, 15a, 15b) eine zweite Kabeltrommel (23) und ein auf der zweiten Kabeltrommel (23) angeordnetes zweites Kabel (24) aufweist, wobei ein elektrischer Strom von einer externen, insbesondere landbasierten, Stromquelle (25) über das zweite Kabel (24) zur Be- und Entladevorrichtung (15, 15a, 15b) übertragbar ist, wobei bevorzugt das zweite Kabel (24) derart auf der zweiten Kabeltrommel (23) angeordnet ist, dass das zweite Kabel (24) beim Verfahren der Be- und Entladevorrichtung (15, 15a, 15b) von der zweiten Kabeltrommel (23) abgerollt und/oder aufgerollt wird, wobei weiter bevorzugt das zweite Kabel (24) beim Verfahren der Be- und Entladevorrichtung (15, 15a, 15b) in der länglichen Vertiefung (22, 32) und/oder an der Führungsschiene abgelegt und/oder aus der Vertiefung (22, 32) und/oder von der Führungsschiene aufgenommen oder abgenommen wird.

9. System (100) nach einem der Anspruch 8,
**dadurch gekennzeichnet,**
**dass** die erste Kabeltrommel (21) und die zweite Kabeltrommel (23) eine Doppelkabeltrommel (31) bilden.

10. System (100) nach der Anspruch 8 oder 9,
**dadurch gekennzeichnet,**
**dass** das zweite Kabel (24) mit der Verteilereinrichtung (26) elektrisch verbunden ist, sodass der elektrische Strom von dem zweiten Kabel (24) über die Verteilereinrichtung (26) in das erste Kabel (17) einspeisbar ist.

11. System (100) nach einem der Ansprüche 8 bis 10,
**dadurch gekennzeichnet,**
**dass** das zweite Kabel (24) einen geringeren elektrischen Widerstand, insbesondere einen geringeren elektrischen Widerstand pro Längeneinheit, als das erste Kabel (17) aufweist, wobei bevorzugt das zweite Kabel (24) eine größere Querschnittsfläche als das erste Kabel (17) aufweist.

12. System (100) nach einem der vorgenannten Ansprüche,
**dadurch gekennzeichnet,**
**dass** eine Stromquelle vorgesehen ist, wobei die Stromquelle an der Be- und Entladevorrichtung (15, 15a, 15b) angeordnet ist und elektrisch mit der Verteilereinrichtung (26) verbunden ist, wobei bevorzugt die Stromquelle (25) eine Stromerzeugungsvorrichtung (28) ist, wobei die Stromerzeugungsvorrichtung (28) einen Verbrennungsmotor, insbesondere einen Gasverbrennungsmotor (29), und einen Generator (30) umfasst, und/oder dass die Stromquelle (25) eine Wasserstoffzelle umfasst und/oder dass die Stromquelle (25) einen Energiespeicher, insbesondere eine Batterie, umfasst.

13. System (100) nach einem der vorgenannten Ansprüche,
**dadurch gekennzeichnet,**
**dass** mehrere Be- und Entladevorrichtungen (15, 15a, 15b)n (15) vorgesehen sind, wobei mindestens jede fünfte, bevorzugt jede vierte, insbesondere bevorzugt jede dritte, Be- und Entladevorrichtung (15, 15a, 15b), zur Versorgung von Wasserfahrzeugen (10), insbesondere Schiffen (12), in einem Hafen (11) mit elektrischem Strom ausgebildet ist.

14. Be- und Entladevorrichtung (15, 15a, 15b) für ein System (100) nach einem der Ansprüche 1 bis 13.

15. Verfahren zum Versorgen von Wasserfahrzeugen (10), insbesondere Schiffen (12), in einem Hafen (11) mit elektrischem Strom, mit einem System (100) nach einem der Ansprüche 4 bis 13, wobei ein Bordnetz eines Wasserfahrzeugs (10) an eine auf einer Kaianlage (13) angeordnete Anschlussvorrichtung (18) angeschlossen wird, wobei ein elektrischer Strom von einer Be- und Entladevorrichtung (15, 15a, 15b) über ein erstes Kabel (17) und die Anschlussvorrichtung (18) an das Wasserfahrzeug (10) übertragen wird.

## Geänderte Patentansprüche

### Geänderte Patentansprüche gemäss Regel 137(2) EPÜ.

1. System (100) zur Versorgung von Wasserfahrzeugen (10), insbesondere Schiffen (12), in einem Hafen (11) mit elektrischem Strom, wobei das System eine Krananlage (16) auf einer Kaianlage (13) und ein erstes Kabel (17) umfasst, wobei der elektrische Strom über das erste Kabel (17) von der Krananlage (16) an das Wasserfahrzeug (10) übertragbar ist,
**dadurch gekennzeichnet,**
**dass** die Krananlage (16) eine Be- und Entladevorrichtung (15, 15a, 15b) für Wasserfahrzeuge (10) ist, dass eine Anschlussvorrichtung (18) zum Anschluss eines elektrischen Bordnetzes eines Wasserfahrzeugs (10) vorgesehen ist, dass das erste Kabel (17) mit der Anschlussvorrichtung (18) elektrisch verbindbar oder verbunden ist, wobei die Anschlussvorrichtung (18) auf der Kaianlage (13) anordbar oder angeordnet ist, dass die Be- und Entladevorrichtung (15, 15a, 15b) eine erste Kabeltrommel (21) aufweist, dass das erste Kabel (17) derart auf der ersten Kabeltrommel (21) angeordnet und mit der Anschlussvorrichtung (18) elektrisch verbindbar oder verbunden ist, dass das erste Kabel (17) bei auf der Kaianlage (13) angeordneter Anschlussvorrichtung (18) beim Verfahren der Be- und Entladevorrichtung (15, 15a, 15b) von der ersten Kabeltrommel (21) abgerollt und/oder aufgerollt wird.

2. System (100) nach Anspruch 1,
**dadurch gekennzeichnet,**
**dass** die Be- und Entladevorrichtung (15, 15a, 15b) für Wasserfahrzeuge (10) auf einem Schienensystem (14) der Kaianlage (13) verfahrbar ist.

3. System (100) nach Anspruch 1 oder 2,
**dadurch gekennzeichnet,**
**dass** die Be- und Entladevorrichtung (15, 15a, 15b) für Wasserfahrzeuge (10) ein Hafenkran und/oder eine Containerbrücke (33) und/oder ein Schüttgutkran und/oder ein Stückgutkran ist.

4. System (100) nach einem der vorgenannten Ansprüche,
**dadurch gekennzeichnet,**
**dass** die Anschlussvorrichtung (18) temporär auf der Kaianlage (13) anordbar oder angeordnet ist.

5. System (100) nach nach einem der vorgenannten Ansprüche,
**dadurch gekennzeichnet,**
**dass** die Kaianlage (13) eine längliche Vertiefung (22, 32), insbesondere eine Nut oder Rille, und/oder eine Führungsschiene umfasst, wobei die Vertiefung (22, 32) und/oder die Führungsschiene bevorzugt parallel zu dem Schienensystem (14) und/oder der Kaimauer (18) verläuft, sodass das erste Kabel (17) beim Verfahren der Be- und Entladevorrichtung (15, 15a, 15b) auf einer Strecke zwischen der Be- und Entladevorrichtung (15, 15a, 15b) und der Anschlussvorrichtung (18) in der Vertiefung (22, 32) und/oder an der Führungsschiene abgelegt und/oder aus der Vertiefung (22, 32) und/oder von der Führungsschiene aufgenommen oder abgenommen wird.

6. System (100) nach einem der vorgenannten Ansprüche,
**dadurch gekennzeichnet,**
**dass** die Be- und Entladevorrichtung (15, 15a, 15b) eine Verteilereinrichtung (26) aufweist, wobei das erste Kabel (17) mit der Verteilereinrichtung (26) elektrisch verbunden ist, sodass der elektrische Strom von der Verteilereinrichtung (26) in das erste Kabel (17) einspeisbar ist, wobei bevorzugt ein elektrisches System (27) der Be- und Entladevorrichtung (15, 15a, 15b) elektrisch mit der Verteilereinrichtung (26) verbunden ist.

7. System (100) nach einem der vorgenannten Ansprüche,
**dadurch gekennzeichnet,**
**dass** die Be- und Entladevorrichtung (15, 15a, 15b) eine zweite Kabeltrommel (23) und ein auf der zweiten Kabeltrommel (23) angeordnetes zweites Kabel (24) aufweist, wobei ein elektrischer Strom von einer externen, insbesondere landbasierten, Stromquelle (25) über das zweite Kabel (24) zur Be- und Entladevorrichtung (15, 15a, 15b) übertragbar ist, wobei bevorzugt das zweite Kabel (24) derart auf der zweiten Kabeltrommel (23) angeordnet ist, dass das zweite Kabel (24) beim Verfahren der Be- und Entladevorrichtung (15, 15a, 15b) von der zweiten Kabeltrommel (23) abgerollt und/oder aufgerollt wird, wobei weiter bevorzugt das zweite Kabel (24) beim Verfahren der Be- und Entladevorrichtung (15, 15a, 15b) in der länglichen Vertiefung (22, 32) und/oder an der Führungsschiene abgelegt und/oder aus der Vertiefung (22, 32) und/oder von der Führungsschiene aufgenommen oder abgenommen wird.

8. System (100) nach einem der Anspruch 7,
**dadurch gekennzeichnet,**
**dass** die erste Kabeltrommel (21) und die zweite Kabeltrommel (23) eine Doppelkabeltrommel (31) bilden.

9. System (100) nach der Anspruch 7 oder 8,
**dadurch gekennzeichnet,**
**dass** das zweite Kabel (24) mit der Verteilereinrichtung (26) elektrisch verbunden ist, sodass der elektrische Strom von dem zweiten Kabel (24) über die Verteilereinrichtung (26) in das erste Kabel (17) einspeisbar ist.

10. System (100) nach einem der Ansprüche 7 bis 9,
**dadurch gekennzeichnet,**
**dass** das zweite Kabel (24) einen geringeren elektrischen Widerstand, insbesondere einen geringeren elektrischen Widerstand pro Längeneinheit, als das erste Kabel (17) aufweist, wobei bevorzugt das zweite Kabel (24) eine größere Querschnittsfläche als das erste Kabel (17) aufweist.

11. System (100) nach einem der vorgenannten Ansprüche,
**dadurch gekennzeichnet,**
**dass** eine Stromquelle vorgesehen ist, wobei die Stromquelle an der Be- und Entladevorrichtung (15, 15a, 15b) angeordnet ist und elektrisch mit der Verteilereinrichtung (26) verbunden ist, wobei bevorzugt die Stromquelle (25) eine Stromerzeugungsvorrichtung (28) ist, wobei die Stromerzeugungsvorrichtung (28) einen Verbrennungsmotor, insbesondere einen Gasverbrennungsmotor (29), und einen Generator (30) umfasst, und/oder dass die Stromquelle (25) eine Wasserstoffzelle umfasst und/oder dass die Stromquelle (25) einen Energiespeicher, insbesondere eine Batterie, umfasst.

12. System (100) nach einem der vorgenannten Ansprüche,
**dadurch gekennzeichnet,**
**dass** mehrere Be- und Entladevorrichtungen (15, 15a, 15b)n (15) vorgesehen sind, wobei mindestens jede fünfte, bevorzugt jede vierte, insbesondere bevorzugt jede dritte, Be- und Entladevorrichtung (15, 15a, 15b), zur Versorgung von Wasserfahrzeugen (10), insbesondere Schiffen (12), in einem Hafen (11) mit elektrischem Strom ausgebildet ist.

13. Be- und Entladevorrichtung (15, 15a, 15b) für ein System (100) nach einem der Ansprüche 1 bis 12.

14. Verfahren zum Versorgen von Wasserfahrzeugen (10), insbesondere Schiffen (12), in einem Hafen (11) mit elektrischem Strom, mit einem System (100) nach einem der Ansprüche 1 bis 12, wobei ein Bordnetz eines Wasserfahrzeugs (10) an eine auf einer Kaianlage (13) angeordnete Anschlussvorrichtung (18) angeschlossen wird, wobei ein elektrischer Strom von einer Be- und Entladevorrichtung (15, 15a, 15b) über ein erstes Kabel (17) und die Anschlussvorrichtung (18) an das Wasserfahrzeug (10) übertragen wird.
